# DEMANDE DE BREVET EUROPEEN

(11) **EP 1 270 152 A1**
(43) Date de publication de la demande: **02.01.2003**
(21) Numéro de dépôt: 02291343.8
(22) Date de dépôt: 31.05.2002
(51) Int. Cl.: B25J 9/02

(54) **Dispositif de transfert à haute précision**

(30) Priorité: 18.06.2001 FR 0107960
(71) Demandeur: Prodel Holding, 60170 Carlepont (FR)
(72) Inventeur: Prodel, Jacques, 60170 Carlepont (FR)
(74) Mandataire: Bezault, Jean

(57) **Abrégé**

Le dispositif de transfert comprend une structure de support (2, 6), au moins un équipage mobile (16) apte à être déplacé sur la structure de support selon une direction d'axe Y, un chariot (40) apte à être déplacé sur l'équipage mobile (16) selon une direction d'axe Z perpendiculaire à la direction d'axe Y, des moyens d'entraînement du chariot (40) comprenant un moteur (42) pour déplacer le chariot (40) par rapport à l'équipage mobile (16) selon la direction d'axe Z. Le moteur est porté par la structure de support (2, 6) et il entraîne le chariot (40) par l'intermédiaire d'une transmission. Cette transmission est constituée de préférence par un arbre d'entraînement (46) entraîné par le moteur d'entraînement, par une poulie (52) montée coulissante en translation sur l'arbre d'entraînement et par une courroie de transmission (56) entraînée par la poulie et fixée au chariot (40).

## Description

L'invention se rapporte à un dispositif de transfert, par exemple un dispositif de transfert de pièces d'un emplacement à un autre. Elle s'applique particulièrement mais non exclusivement au transfert à haute précision pour le dépôt d'une pièce sur une palette immobilisée. Un tel dispositif de transfert peut notamment faire partie d'une installation pour la circulation de palettes porte-pièces se déplaçant dans des modules par des moyens d'entraînement particuliers et connue sous le nom d'atelier flexible.

Plus précisément l'invention concerne un dispositif de transfert comprenant une structure de support, au moins un équipage mobile apte à être déplacé sur la structure de support selon une direction d'axe Y, un chariot apte à être déplacé sur l'équipage mobile selon une direction d'axe Z perpendiculaire à la direction d'axe Y, des moyens d'entraînement du chariot comprenant un moteur pour déplacer le chariot par rapport à l'équipage mobile selon la direction d'axe Z.

Dans les dispositifs de transfert connus de ce type le moteur d'entraînement du chariot est monté sur l'équipage mobile. Ceci se traduit par une inertie importante de l'équipage mobile. Par suite, sa vitesse de déplacement, son accélération et la précision de son positionnement sont médiocres.

L'invention a pour objet un dispositif de transfert qui remédie à ces inconvénients. Ces buts sont atteints, conformément à l'invention, par le fait que le moteur est porté par la structure de support et que le moteur entraîne le chariot par l'intermédiaire d'une transmission.

Grâce à ces caractéristiques le moteur d'entraînement du chariot n'est pas porté par l'équipage mobile. L'inertie de l'équipage mobile est diminuée. Sa vitesse de déplacement, son accélération et la précision de son positionnement sont nettement améliorées.

Le dispositif de transfert de l'invention peut comporter deux ou trois axes de déplacement. S'il ne comporte que deux axes de déplacement, la structure de support est constituée simplement par un bâti fixe et le moteur d'entraînement est monté sur le bâti fixe.

Si le dispositif de transfert comporte trois axes de déplacement, la structure de support est constituée par un bâti fixe et par un équipage mobile principal apte à être déplacé par rapport au bâti selon une direction d'axe X perpendiculaire à la direction Y de déplacement de l'équipage mobile et à la direction Z de déplacement du chariot. Le moteur d'entraînement est monté sur l'équipage mobile principal.

De préférence la transmission est constituée par un arbre d'entraînement parallèle à l'axe Y de déplacement du chariot, monté tournant sur la structure de support et entraîné par le moteur d'entraînement, par une roue d'entraînement montée coulissante en translation sur l'arbre d'entraînement et entraînée en rotation par cet arbre, et par un lien de transmission en boucle fermée, qui est entraîné par la roue d'entraînement et fixé au chariot.

Dans un mode de réalisation préféré, la roue d'entraînement est une poulie et le lien de transmission est une courroie de transmission, avantageusement une courroie crantée. On pourrait également utiliser d'autres types de courroies, comme une courroie trapézoïdale.

Dans un autre mode de réalisation, la roue d'entraînement est un pignon et le lien de transmission est une chaîne.

Selon une variante préférée, la roue d'entraînement est montée sur l'arbre d'entraînement par l'intermédiaire d'un patin.

D'autres caractéristiques et avantages de la présente invention apparaîtront encore à la lecture de la description qui suit d'exemples de réalisation donnés à titre illustratif en référence aux figures annexées. Sur ces figures:
- la figure 1 est une vue d'ensemble latérale d'un dispositif de transfert conforme à la présente invention ; et
- la figure 2 est une vue en coupe, à échelle agrandie, selon la ligne II-II de la figure 1.

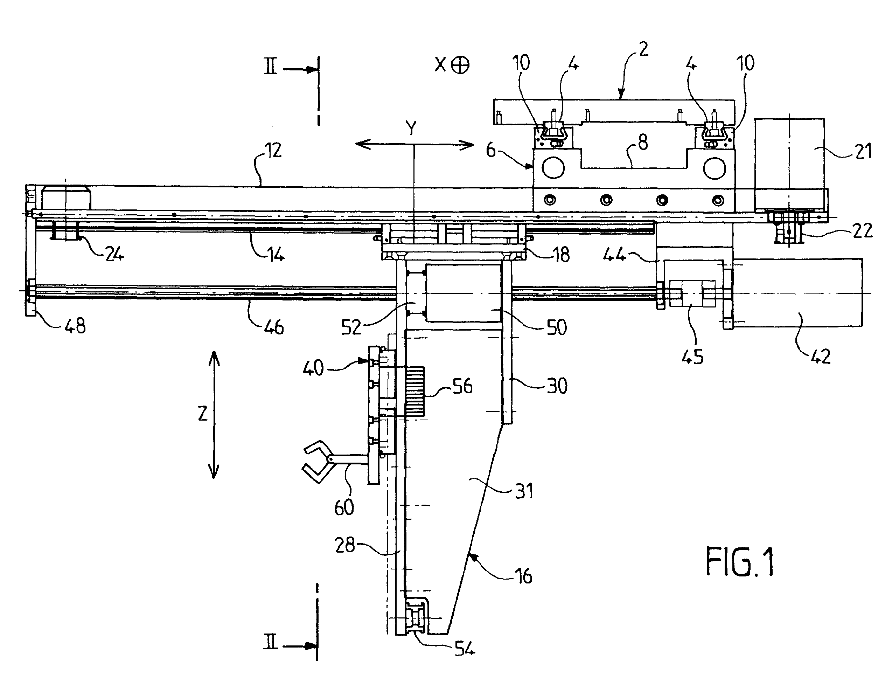

On a représenté sur la figure 1 une vue générale d'un dispositif de transfert selon l'invention. Ce dispositif comporte un bâti fixe 2 sur lequel sont montés deux rails de guidage 4, parallèles entre eux, présentant un profil en queue d'aronde. Un équipage mobile principal 6 est monté coulissant sur les rails de guidage 4. L'équipage mobile principal 6 est constitué d'un châssis principal 8 sur lequel sont fixées deux glissières parallèles 10 adaptées respectivement aux rails 4. Un moteur (non représenté) assure le déplacement en translation de l'équipage mobile 6 selon un axe X perpendiculaire au plan de la figure et définissant une direction horizontale.

Une potence 12 est fixée sur le châssis principal 8. La potence 12 s'étend selon une direction Y horizontale et perpendiculaire à la direction X des rails 4. Elle porte elle-même sur sa face inférieure deux rails de guidage 14 parallèles entre eux. Un équipage mobile secondaire 16 est monté coulissant sur les rails de guidage 14. À cet effet l'équipage mobile 16 comporte un châssis 18 sur lequel sont prévues deux glissières 20 qui s'adaptent aux rails 14. Un moteur 21 est monté à une extrémité de la potence 12. Le moteur 21 entraîne une poulie d'entraînement 22. Une poulie de renvoi 24 est prévue à l'extrémité opposée de la potence 12. Un moyen d'entraînement (non représenté) passe sur la poulie d'entraînement et sur la poulie de renvoi 24. Ce moyen d'entraînement est par exemple une chaîne, une courroie crantée ou tout autre moyen analogue. L'équipage mobile secondaire 16 est fixé au moyen d'entraînement. Ainsi le moteur 21 permet de déplacer en translation l'équipage mobile 16 selon la direction Y. Il est possible d'utiliser un moyen d'entraînement d'un autre type, par exemple une vis à bille ou un axe linéaire.

Le châssis 18 supporte un bâti vertical 26 constitué de deux parois 28 et 30 maintenues par une entretoise 31. La paroi 28 est munie de deux rails de guidage 32 disposés parallèles. Pour des raisons de fabrication les rails 32 peuvent être identiques aux rails 14.

Un chariot 40 est monté glissant sur les rails 32 suivant une direction d'axe Z, verticale et perpendiculaire à la direction d'axe Y. Conformément à l'invention, le dispositif de transfert comporte des moyens d'entraînement du chariot 40. Ces moyens comprennent tout d'abord un moteur 42 monté sur un support 44 fixé sous une extrémité de la potence 12. Le moteur 42 entraîne, par l'intermédiaire d'un accouplement 45, un arbre 46 guidé à son autre extrémité dans un palier 48 porté par l'autre extrémité de la potence 12. L'arbre d'entraînement 46 présente une forme non circulaire, par exemple une forme en diabolo. Avantageusement la section de l'arbre d'entraînement 46 peut être identique à la section des rails de guidage 14 et 32. Cependant cette caractéristique n'est pas impérative et l'arbre pourrait présenter toute autre forme non circulaire. Il pourrait s'agir par exemple d'un arbre cannelé.

Un patin 50 porté par le bâti 26 tourne avec l'arbre d'entraînement 46. Le patin 50 glisse le long de l'arbre d'entraînement lorsque l'équipage mobile 16 se déplace sur les rails de guidage 14 selon la direction Y. De cette manière la rotation de l'arbre 46 est transmise au patin 50 quelle que soit la position de l'équipage mobile 16 sur la potence 12.

Le patin 50 est solidaire d'une poulie d'entraînement 52. Une poulie de renvoi 54 est montée à l'extrémité inférieure du bâti 26. Une courroie crantée 56 passe sur la poulie d'entraînement 52 et sur la poulie de renvoi 54. La courroie 56 pourrait être remplacée par un autre type de courroie, par exemple une courroie trapézoïdale, ou encore par une chaîne ccopérant avec un pignon. Le chariot 40 est fixé à la courroie crantée 56. A cet effet, une lumière 58 est prévue dans la paroi 28 sur toute la longueur de la course du chariot 40. Un bras (non représenté) passe à travers la lumière 58 pour se fixer sur la courroie crantée 56.

Le chariot 40 peut être équipé d'un outil 60 de tout type approprié, tel que par exemple un outil de préhension, mesure, contrôle, vissage, etc. Dans l'exemple représenté, l'outil 60 est un outil de préhension, tel qu'une pince, comprenant deux mâchoires mobiles susceptibles d'être rapprochées l'une de l'autre pour saisir une pièce et la déplacer dans un réceptacle de positionnement (non représenté) porté par une palette (non représentée) dans un atelier flexible.

Grâce au dispositif qui vient d'être décrit, on assure le déplacement en translation verticale du chariot 40 selon une direction Z sans qu'un moteur d'entraînement soit prévu sur l'équipage mobile 16. En effet le moteur d'entraînement 42 qui assure le déplacement du chariot 40 est monté sur l'équipage mobile principal 6. De la sorte, la masse de l'équipage mobile 16 est diminuée. Par suite son inertie est réduite. Sa vitesse de déplacement, son accélération et la précision de son positionnement sont améliorées.

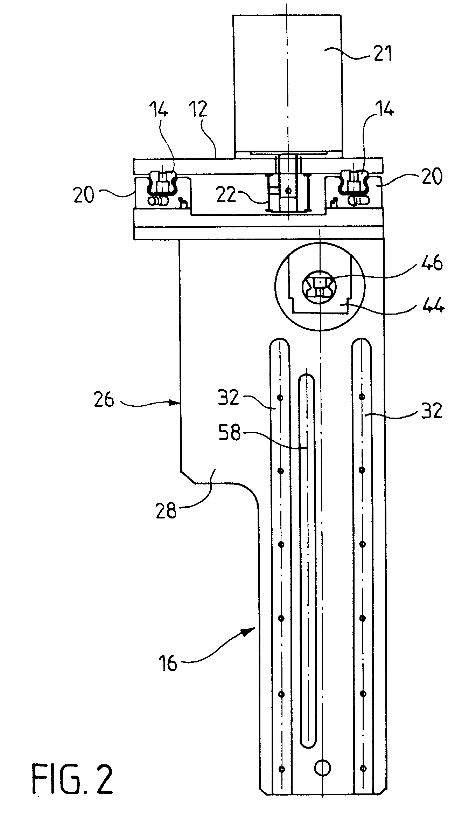

Le dispositif de transfert décrit en référence aux figures 1 et 2 est un dispositif à trois axes X, Y et Z. Il comporte donc un bâti fixe, un équipage mobile principal 6 se déplaçant selon une direction horizontale X, un équipage mobile secondaire 16 se déplaçant selon une direction horizontale Y perpendiculaire à la direction X et un chariot 40 se déplaçant selon une direction verticale Z. Dans ce mode de réalisation la structure de support à laquelle le moteur d'entraînement 42 du chariot 40 est fixé est constituée par le bâti fixe lui-même et par l'équipage mobile principal 6.

Dans une variante de réalisation le dispositif de transfert pourrait ne comporter que deux axes, à savoir un axe horizontal Y et un axe vertical Z. Dans ce cas l'équipage mobile 6 est monté directement sur le bâti fixe 2. Le bâti fixe 2 constitue alors la structure de support à lui seul. Le moteur d'entraînement 42 est monté sur le bâti fixe 2 au lieu d'être monté sur l'équipage mobile principal 6.

## Revendications

1. Dispositif de transfert comprenant une structure de support (2, 6), au moins un équipage mobile (16) apte à être déplacé sur la structure de support selon une direction d'axe Y, un chariot (40) apte à être déplacé sur l'équipage mobile (16) selon une direction d'axe Z perpendiculaire à la direction d'axe Y, des moyens d'entraînement du chariot (40) comprenant un moteur (42) pour déplacer le chariot (40) par rapport à l'équipage mobile (16) selon la direction d'axe Z,
**caractérisé en ce que** le moteur est porté par la structure de support (2, 6), et **en ce que** le moteur (42) entraîne le chariot (40) par l'intermédiaire d'une transmission.

2. Dispositif selon la revendication 1, **caractérisé en ce que** la structure de support est un bâti fixe (2).

3. Dispositif selon la revendication 1, **caractérisé en ce que** la structure de support est constituée par un bâti fixe (2) et par un équipage mobile principal (6) apte à être déplacé par rapport au bâti (2) selon une direction d'axe X perpendiculaire à la direction d'axe Y de déplacement de l'équipage mobile et à la direction d'axe Z de déplacement du chariot (40).

4. Dispositif selon l'une des revendications 1 à 3, **caractérisé en ce que** la transmission est constituée par un arbre d'entraînement (46) parallèle à l'axe Y de déplacement du chariot (40), monté tournant sur la structure de support (2, 6) et entraîné par le moteur d'entraînement, par une roue d'entraînement (52) montée coulissante en translation sur l'arbre d'entraînement et entraînée en rotation par cet arbre, et par un lien de transmission (56) en boucle fermée, qui est entraîné par la roue d'entraînement et fixé au chariot (40).

5. Dispositif selon la revendication 4, **caractérisé en ce que** la roue d'entraînement (52) est une poulie et le lien de transmission (56) est une courroie de transmission.

6. Dispositif selon la revendication 5, **caractérisé en ce que** la courroie de transmission (56) est une courroie crantée.

7. Dispositif selon la revendication 4, **caractérisé en ce que** la roue d'entraînement (52) est un pignon et le lien de transmission (56) est une chaîne.

8. Dispositif selon l'une des revendications 4 à 7, **caractérisé en ce que** la roue d'entraînement (52) est montée sur l'arbre d'entraînement (46) par l'intermédiaire d'un patin (50).

9. Dispositif selon l'une des revendications 1 à 8, **caractérisé en ce que** la direction d'axe Y est horizontale, tandis que la direction d'axe Z est verticale.

10. Dispositif selon l'une des revendications 1 à 9, **caractérisé en ce que** le chariot (40) porte un outil (60).
